# FASCICULE DE BREVET EUROPEEN

(11) **EP 0 550 586 B1**
(45) Date de publication et mention de la délivrance du brevet: **14.02.1996**
(21) Numéro de dépôt: 91917310.4
(22) Date de dépôt: 27.09.1991
(51) Int. Cl.: H04N 5/21

(54) **PROCEDE DE MESURE DU BRUIT DANS UNE IMAGE VIDEO ACTIVE**
VERFAHREN ZUR MESSUNG VON RAUSCHEN IN EINEM AKTIVEN VIDEOBILD
METHOD FOR MEASURING THE NOISE IN AN ACTIVE VIDEO IMAGE

(30) Priorité: 28.09.1990 FR 9011986
(43) Date de publication de la demande: 14.07.1993
(73) Titulaire: THOMSON multimedia, F-92400 Courbevoie (FR)
(72) Inventeur: HACKETT, Andrew, F-92045 Paris-La Défense Cédex 67 (FR)
(74) Mandataire: Ruellan-Lemonnier, Brigitte
(86) Numéro de dépôt international: FR9100756
(87) Numéro de publication internationale: WO9206558

(56) Documents cités:
- US-A- 4 249 209

## Description

La présente invention concerne un procédé de mesure du bruit dans une image vidéo active, ledit procédé permettant de modifier automatiquement la valeur du coefficient de réduction de bruit appliqué dans les procédés de réduction de bruit utilisés dans le traitement des images vidéo.

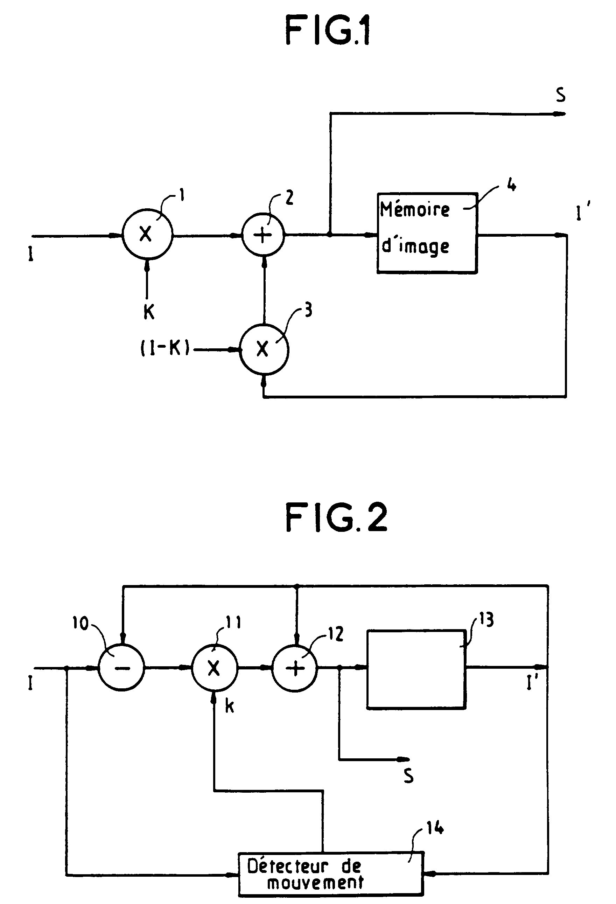

Actuellement dans le traitement des signaux vidéo, différents algorithmes sont utilisés pour réaliser une réduction de bruit. Ces algorithmes se divisent en deux classes principales, à savoir les algorithmes spaciaux qui comportent principalement un filtrage passe-bas et les algorithmes temporels qui utilisent un stockage de trame ou d'image. Dans le cas où on utilise un algorithme de réduction de bruit de type temporel pour le traitement d'un signal vidéo, celui-ci peut être mis en oeuvre dans un filtre récursif temporel tel que représenté sur la figure 1. Ce filtre est constitué principalement par un multiplicateur 1 qui reçoit en entrée le signal vidéo I et qui le multiplie par un coefficient de réduction de bruit K. Ce coefficient de réduction de bruit K peut prendre une valeur variant entre 0 et 1. La sortie du multiplicateur 1 est envoyée sur un additionneur 2 qui ajoute donc une fraction du signal vidéo en entrée à un signal issu d'un multiplicateur 3. Le multiplicateur 3 reçoit en entrée le signal I' issu d'une mémoire d'image 4 qui correspond en fait au signal issu de l'additionneur 2 retardé d'une image. Le multiplicateur 3 multiplie donc ce signal I' par un coefficient (1 - K). Les deux coefficients appliqués sur les multiplicateurs 1 et 3 ont une somme égale à 1 de manière à maintenir un gain en courant continu constant à travers le filtre. La sortie de l'additionneur 2 permet d'obtenir aussi le signal vidéo en sortie S. Lorsque l'on examine ce filtre on voit que, si le coefficient de réduction de bruit K égale 1, le coefficient multiplicateur du multiplicateur 3 est égale à 0 et, en conséquence il n'y a pas de contre-réaction et aucune réduction de bruit. Si le coefficient de réduction de bruit K égale 0, il n'y a aucune entrée et une image "gelée" recircule dans le circuit, avec un retard d'une image. En fait, une réduction de bruit se produit lorsque K a une valeur comprise entre 0 et 1, à savoir lorsqu'une fraction du signal d'entrée est ajoutée au signal recirculant à travers le circuit avec un retard d'une image. Toutefois, un tel système, lorsqu'il est utilisé pour réduire les bruits d'un signal de télévision, présente un certain nombre d'inconvénients. Le principal inconvénient réside dans le fait que les parties en mouvement de l'image apparaissent avec un phénomène de trainage. En effet, pour une valeur petite de K entraînant une bonne réduction du bruit, le filtre a une réponse impulsionnelle longue et, en conséquence, l'information dans le filtre a besoin de plusieurs images pour diminuer.

En fait, si les seules dégradations d'image introduites par un tel filtre se produisent lorsqu'il y a un mouvement dans le signal, il est souhaitable d'introduire un mécanisme permettant de détecter le mouvement et de l'utiliser pour empêcher une détection de mouvement sur les parties en mouvement de l'image. Un tel système a été proposé et est représenté par exemple sur la figure 2. Ce dispositif comporte donc principalement un soustracteur 10 qui reçoit le signal vidéo en entrée I et qui le soustrait au signal vidéo I' issu d'une mémoire d'image 13, ce signal vidéo I' étant le signal retardé correspondant à l'image antérieure traitée. La sortie du soustracteur 10 est envoyée sur un multiplicateur 11 pour être multiplié par le coefficient de réduction de bruit K issu d'un détecteur de mouvement 14. La sortie du multiplicateur 11 est envoyée sur un additionneur 12 qui reçoit sur son autre entrée le signal vidéo I' issu de la mémoire d'image 13. La sortie de l'additionneur 12 est envoyée sur la mémoire d'image 13 qui retarde le signal vidéo d'une image traitée. D'autre part, le signal vidéo en sortie S est issu de la sortie de l'additionneur 12. Comme représenté sur la figure 2, le détecteur de mouvement 14 fournit le coefficient de réduction de bruit K qu'il calcule en utilisant à la fois le signal vidéo en entrée I et le signal vidéo traité et retardé d'une image I'.

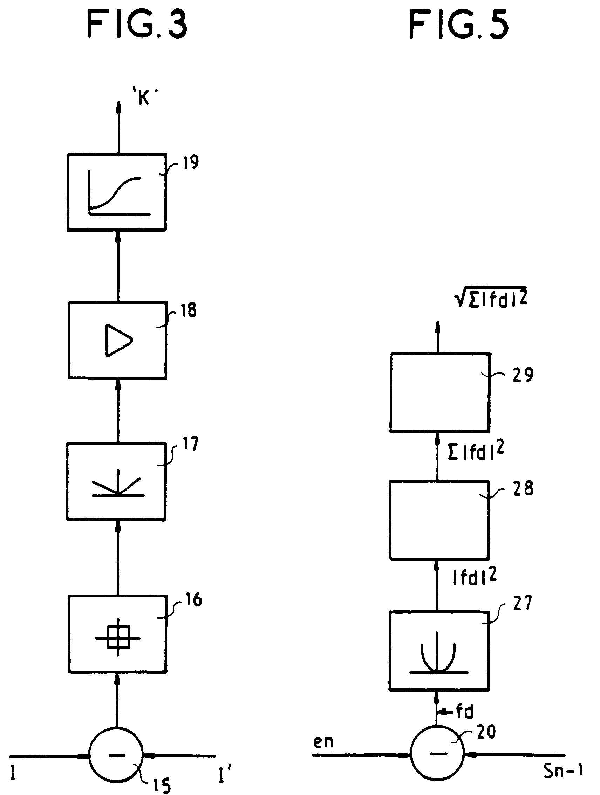

Le détecteur de mouvement 14 est constitué par un ensemble de circuits qui fournissent en sortie une valeur de K contrôlant la quantité de réduction de bruit effectuée. Ce détecteur doit donc distinguer entre un mouvement qui est habituellement une modification cohérente entre les images et un bruit qui est aléatoire. Pour ce faire, le détecteur de mouvement réalise un certain nombre d'opérations, comme représenté sur la figure 3, permettant d'obtenir le coefficient K. On forme tout d'abord un signal différence d'images en soustrayant au niveau du soustracteur 15 sur la base du pixel, le signal vidéo en entrée I et le signal vidéo I' retardé d'une période image complète. Le signal différence résultant est alors moyenné spatialement sur une fenêtre de dimensions N x M (typiquement 5 et 3) comme représenté sur le bloc 16. Cette opération permet de réduire l'influence du bruit. A ce stade, certaines indications concernant le mouvement sont aussi réduites. Le signal moyenné spatialement issu du bloc 16 est alors rectifié comme représenté par le bloc 17. On obtient un signal unipolaire représentant la valeur et la position des parties en mouvement dans l'image. Ce signal est multiplié par le gain de boucle comme représenté par le bloc 18 et le signal résultant est limité entre 0 et 255, à savoir codé sur 8 bits, et appliqué à une fonction de transfert subjective comme représenté par le bloc 19. La sortie de la fonction de transfert subjective donne la valeur de K qui est utilisée dans le filtre temporel. La fonction de transfert subjective telle que représentée dans le bloc 19 est en fait choisie en fonction de la taille, de la moyenne spatiale et du gain de boucle pour obtenir un bon compromis entre la vision d'un trainage dû à une valeur de K trop petite pour un mouvement et la nécessité de maintenir K petit afin d'obtenir une bonne réduction du bruit. On obtient donc une fonction de transfert qui commence avec une faible valeur de K puis qui présente une pente croissant rapidement lors de l'apparition d'un moirage particulièrement gênant et qui se termine à la valeur 1 pour une valeur en abscisse de 255. D'autre part, le gain de boucle représenté par le bloc 18 est un facteur multiplicatif constant appliqué en sortie du dispositif rectificateur et qui peut être ajusté de telle sorte que l'entrée de la fonction de transfert occupe toute la gamme 0 à 255 pour une gamme complète de mouvement, à savoir 0 quant il n'y a pas de mouvement et pas de bruit jusqu'à 255 pour un mouvement où l'on souhaite que K = 1.

Le filtre de la figure 2 fournit une réduction de bruit dans le traitement des images comportant beaucoup de bruit. Cependant, le processus mis en oeuvre dans ce cas est un compromis entre la réduction de bruit et le trainage. En conséquence, des parasites sont forcément introduits dans l'image finale. Toutefois, il est souhaitable d'introduire ces parasites lorsque l'image vidéo est sans bruit. Pour ce faire, il faut donc pouvoir estimer la quantité de bruit présent dans le signal vidéo en entrée et réduire ou accroître la valeur du coefficient de réduction de bruit en fonction de cette mesure. Un procédé nouveau prenant en compte la mesure du bruit a déjà été proposé, notamment dans le brevet US-A-4 249 209.

La présente invention a donc pour but de proposer un procédé de mesure de bruit dans une image vidéo active qui permet d'agir sur la valeur du coefficient de réduction de bruit K issu du détecteur de mouvement et qui soit simple à mettre en oeuvre.

En conséquence, la présente invention a pour objet un procédé d'ajustement du coefficient de réduction de bruit K dans une image vidéo active, caractérisé par les étapes suivantes :
- pendant une période de traitement donné, on réalise en parallèle la détection de mouvement et la mesure de bruit, la mesure du bruit étant obtenue pour chaque pixel d'une image vidéo considéré comme stationnaire par un détecteur de mouvement traitant des images successives, en calculant la différence f_{d} entre le signal vidéo non traité, correspondant à ce pixel et le signal vidéo traité avec un coefficient de réduction de bruit K correspondant au pixel de même position spatiale dans une image précédente ;
- en calculant le carré de la valeur absolue de la différence de manière à obtenir une valeur |f_{d}| ;
- en additionnant la valeur |f_{d}| aux autres valeurs |f_{d}| déjà obtenues pour les pixels déterminés comme stationnaires de manière à former une valeur somme Σ|f_{d}| ;
- et en recommençant les opérations ci-dessus jusqu'à ce que le nombre de pixels traités soit égal à une valeur de seuil donnée N₀ ou jusqu'à la fin de la période de traitement, puis
- à la fin des opérations ci-dessus, lorsque le nombre de pixels traités est égal à la valeur de seuil, on utilise-la valeur Σ|f_{d}| pour déterminer la valeur d'un point de référence correspondant au mouvement en fonction du bruit, cette valeur donnant en fonction d'une courbe de transfert définissant le coefficient de réduction de bruit en fonction des valeurs en sortie du détecteur de mouvement, une nouvelle valeur (Kmin) pour le coefficient de réduction de bruit K, sinon on garde l'ancienne valeur du coefficient de réduction de bruit.

Selon un mode de réalisation préférentiel, le point de référence donnant un nouveau coefficient de réduction de bruit est déterminé en prenant la racine carrée de la valeur somme divisée par la valeur de seuil N₀.

Dans le cadre de la présente invention, la mesure du bruit se fait à l'intérieur d'une image active. Cette technique de mesure est basée sur l'idée suivante : dans les parties où le détecteur de mouvement applique une réduction de bruit maximale à l'image, l'image est stationnaire et en conséquence les différences entre pixels dans ces parties sont dues principalement au bruit et non au mouvement.

Cette supposition dépend de la forme de la fonction de transfert décrite ci-dessus. Toutefois, les inexactitudes de mesure ne sont significatives que dans le cas où le bruit est très important et tendent à indiquer un niveau de bruit plus élevé que celui qui est actuellement présent. En fait, ce mode de mesure est généralement compensé et n'affecte pas le fonctionnement du système,

La présente invention a aussi pour objet un dispositif pour la mise en oeuvre du procédé de mesure tel que décrit ci-dessus.

Selon une autre caractéristique de la présente invention permettant de pondérer le changement du coefficient de réduction de bruit, on utilise deux valeurs de seuils N₀ et N₁ avec N₀ > N₁. Ainsi, à la fin de la période de traitement, on utilise la valeur somme Σ|F_{d}| pour déterminer un point de référence donnant avec ladite courbe de transfert un nouveau coefficient de réduction de bruit Kₘᵢₙ. On compare la nouvelle valeur du coefficient de réduction de bruit à la valeur courante de ce coefficient. Si cette valeur est supérieure, on compare le nombre de pixels traités à la première valeur de seuil N₀. Si il est supérieur ou égal, on utilise la nouvelle valeur du coefficient de réduction de bruit sinon on garde l'ancienne valeur. Si la valeur est inférieure, on compare le nombre de pixels traités à la deuxième valeur de seuil N₁. Si il est supérieur ou égal, on utilise la nouvelle valeur du coefficient de réduction de bruit, sinon on garde l'ancienne valeur.

D'autres caractéristiques et avantages de la présente invention apparaîtront à la lecture de la description faite ci-après d'un mode de réalisation préférentiel du procédé et du dispositif, cette description étant faite avec référence aux dessins ci-annexés dans lesquels :
- la figure 1 déjà décrite représente schématiquement un filtre temporel selon l'art antérieur,
- la figure 2 déjà décrite représente schématiquement un filtre temporel adaptatif selon l'art antérieur,
- la figure 3 déjà décrite est un diagramme schématique représentant le fonctionnement d'un détecteur de mouvement selon l'art antérieur,
- la figure 4 est un schéma d'un filtre temporel selon l'art antérieur,
- la figure 5 est un diagramme représentant les différentes étapes mises en oeuvre pour réaliser la mesure du bruit,
- la figure 6 est une courbe donnant la valeur de K en fonction du mouvement,
- la figure 7 est une représentation schématique d'un circuit pour la mise en oeuvre du procédé de la présente invention.

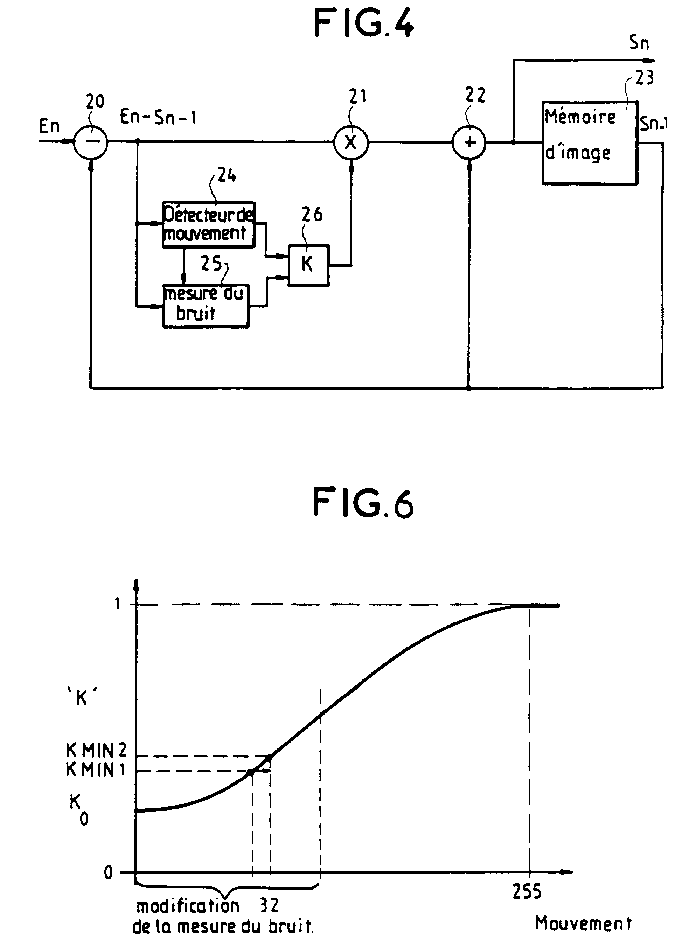

Comme représenté sur la figure 4, le filtre récursif temporel comporte un soustracteur 20 qui reçoit en entrée le signal vidéo En auquel il soustrait le signal vidéo Sn-1 de l'image précédente traitée issu d'une mémoire d'image 23 comme dans les modes de réalisation précédents. Le signal En - Sn-1 en sortie du soustracteur est envoyé sur un multiplicateur 21, sur un détecteur de mouvement 24 et sur un circuit de mesure du bruit 25. Le détecteur de mouvement 24 est identique au détecteur de mouvement utilisé dans le filtre temporel adaptatif de la figure 2 et effectue les mêmes opérations que celles décrites avec référence à la figure 3. D'autre part, le détecteur 24 émet vers le circuit de mesure 25 une impulsion de validation, lorsqu'il détecte des points considérés comme stationnaires. En effet, la mesure du bruit, comme expliqué ci-après, est réalisée dans le dispositif 25 sur des points stationnaires à l'intérieur d'une image active. Les signaux issus du détecteur de mouvement 24 et du circuit de mesure de bruit 25 sont envoyés en entrée d'un additionneur 26 qui donne en sortie, après passage dans la fonction de transfert représentée par le bloc 19 sur la figure 3, la valeur de K qui est appliquée sur l'autre entrée du multiplicateur 21. Ensuite de manière connue, la sortie du multiplicateur 21 est envoyée sur un additionneur 22 qui reçoit sur son autre entrée le signal Sn-1 issu de la mémoire d'image 23. La sortie de l'additionneur 22 est envoyée en entrée de la mémoire d'image 23 et permet d'obtenir directement le signal vidéo en sortie Sn.

On décrira maintenant en se référant plus particulièrement au diagramme de la figure 5 les différentes étapes du procédé de mesure de bruit mis en oeuvre dans la présente invention.

Comme représenté sur la figure 5, pour les pixels considérés comme valides, à savoir les pixels que le détecteur de mouvement 24 a signalé comme stationnaire, le signal différence F_{d} issu du soustracteur 20 est envoyé sur un circuit 27 qui multiplie la valeur absolue de F_{d} par elle-même de manière à obtenir en sortie le signal |F_{d}|. Ce signal |F_{d}| est envoyé sur un circuit 28 qui additionne cette valeur aux valeurs précédemment déterminées. On obtient donc en sortie une valeur Σ|F_{d}|. A la fin de la période de mesure, à savoir à la fin d'une image dans le mode de réalisation représenté, le signal Σ|F_{d}| est envoyé dans un circuit 29 qui en prend la racine carrée. D'autre part, on a réalisé un comptage des pixels ou points images utilisés dans ce calcul pendant la période de traitement. Si ce comptage est supérieur ou égal à une certaine valeur de seuil N₀ prédéterminée, la valeur obtenue en sortie est utilisée comme nouveau point de référence pour calculer la valeur du coefficient de réduction de bruit K dans le circuit 26. Si le nombre de pixels est inférieur à ladite valeur de seuil, on utilise l'ancienne valeur comme coefficient de réduction de bruit K.

Le circuit de mesure du bruit 25 permet donc d'obtenir une estimation du bruit présent dans l'image. Cette estimation est utilisée pour modifier la quantité de réduction de bruit effectuée sur l'image en l'appliquant dans le circuit 26. La manière dont cette estimation est utilisée sera expliquée en se référant plus particulièrement à la figure 6 qui représente une forme particulière d'une fonction de transfert qui peut être utilisée dans un détecteur de mouvement conforme à la présente invention. Dans ce cas, l'axe vertical représente le coefficient de réduction de bruit K utilisé dans le filtre récursif. Il peut prendre une valeur comprise entre 0 et 1. L'axe horizontal représente la sortie du détecteur de mouvement. Les valeurs en sortie du détecteur de mouvement sont codées entre 0 et 255 et les valeurs supérieures à 255 sont limitées à 255 de manière à réaliser un codage sur 8 bits. Comme représenté sur la figure 6, la sortie du détecteur de mouvement pour une source sans bruit parfaitement statique est 0. Ce point est appelé point de référence. Avec un détecteur de mouvement classique lorsque la valeur du mouvement augmente, le point de fonctionnement se déplace vers la droite à partir du point de référence et la valeur de K augmente.

En fait, conformément à la présente invention la mesure du bruit issue du circuit 25 est utilisée pour modifier la valeur du point de référence. La sortie du circuit 25 donne une valeur de mouvement entre, par exemple, 0 et 31, 31 étant la valeur maximale considérée pour une image sans bruit. Cette valeur obtenue en sortie du mouvement correspond à une valeur Kₘᵢₙ₁ qui est considérée en fait comme coefficient de réduction de bruit minimum qui doit être appliqué sur l'image vidéo. En fonction de la valeur issue du circuit de mesure du bruit, un nouveau point référence est positionné correspondant au point référence utilisé lorsque le circuit de mesure du bruit indique une image sans bruit. Lorsque le bruit mesuré diminue, le point de référence se déplace vers la droite , comme représenté sur la figure 6, de manière à donner une autre valeur du coefficient de réduction de bruit Kₘᵢₙ₂. Lorsque le bruit mesuré augmente, le point de référence se déplace vers la gauche jusqu'à ce qu'il atteigne 0. Ainsi, on obtient une réduction de bruit plus importante pour des sources bruyantes que pour des sources à faible bruit et aussi une réduction des parasites introduits dans les sources sans bruit.

En fait le procédé décrit ci-dessus permet d'effectuer une réduction de bruit importante sur un signal bruyant tandis qu'il minimise la quantité de parasites introduite dans un signal clair.

De plus, la forme précise de la fonction de transfert, dont un mode de réalisation est représenté sur la figure 6, a un effet important sur les effets subjectifs de la réduction de bruit. Ceci dépend aussi de la taille du filtre spatial, du gain de boucle et du point de fonctionnement donné par le circuit de mesure de bruit.

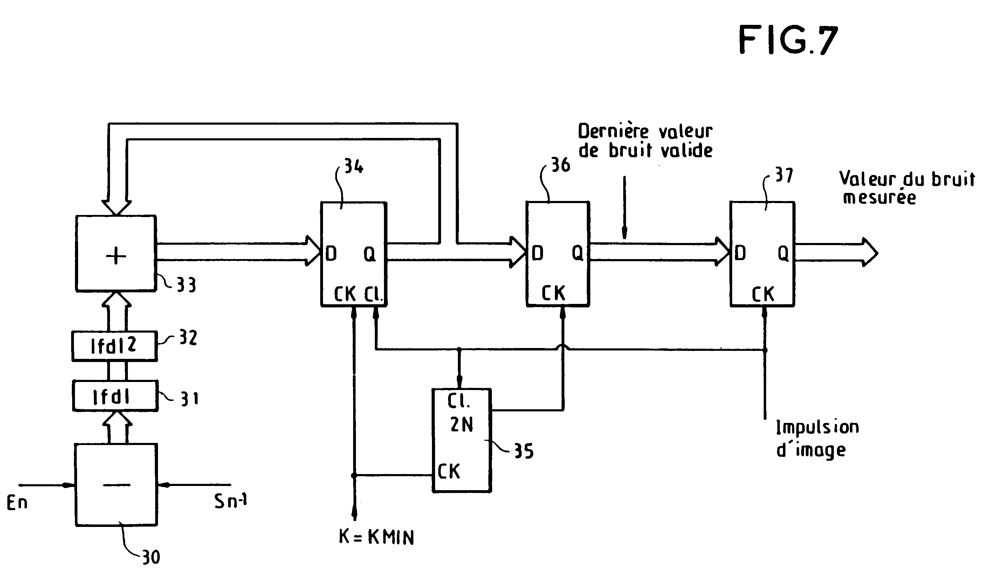

On décrira maintenant avec référence à la figure 7 un mode de réalisation d'un circuit permettant de réaliser le bloc 25 dans la figure 4. En fait le procédé de mesure du bruit décrit ci-dessus nécessite des opérations mathématiques qui sont relativement complexes à réaliser avec des circuits électroniques. Bien que le résultat du calcul ne soit donné que 25 fois par seconde puisque la période de traitement généralement utilisée est d'une image, le processus de moyennage doit fonctionner à des vitesses vidéo. En conséquence, le circuit de la figure 7 est un circuit simplifié qui permet de calculer simplement la valeur du bruit dans une image stationnaire. Comme représenté sur la figure 7, le signal différence d'image est généré, comme pour le détecteur de mouvement en soustrayant dans le soustracteur 30 le signal vidéo entrée En et le signal vidéo retardé d'une trame Sn-1 issu d'une mémoire d'image. Le signal de différence est numérisé avec 8 bits de précision au maximum dans le mode de réalisation représenté. Le signal en sortie du soustracteur 30 est envoyé sur un circuit de valeur absolue 31 puis multiplié par lui-même dans un circuit 32 pour obtenir en sortie le signal |F_{d}|. Ensuite la sortie du circuit 32 est envoyée en entrée d'un accumulateur. Cet accumulateur est constitué par un additionneur 33 et une bascule D 34. L'additionneur 33 reçoit la sortie du circuit 32 qu'elle additionne à la sortie de la bascule D 34. D'autre part, la bascule D 34 est validée par un signal d'horloge CK qui envoie une impulsion lorsque le signal K issu du détecteur de mouvement est égal à Kₘᵢₙ, c'est-à-dire lorsque les pixels considérés sont statiques. Cet accumulateur contient un nombre de bits suffisant à savoir M bits de manière à éviter tout débordement pour 2^{N} échantillons. D'autre part, lorsque la bascule D reçoit une impulsion horloge, simultanément cette impulsion horloge est envoyée en entrée d'un compteur 35 de manière à l'incrémenter de 1. Si le compteur 35 atteint une valeur de seuil, à savoir 2^{N} dans le mode de réalisation représenté, cette valeur est envoyée comme signal d'horloge sur une bascule 36. Cette bascule D 36 reçoit en entrée la valeur issue de la bascule 34 et la garde comme mesure du bruit valable pour l'image suivante. Si le compteur 35 n'atteint pas la valeur de seuil, aucune impulsion d'horloge n'est envoyée sur la bascule 36 qui maintient la dernière valeur comme mesure de bruit valable. Les bits qui sont envoyés de la bascule 34 vers la bascule 36 sont les bits M-N-D les plus significatifs représentant une division par 2^{N} de manière à obtenir une valeur de bruit moyenne et aussi une division par D pour que la mesure du bruit se retrouve dans une gamme de fonctionnement correcte, à savoir entre 0 et 31 dans le mode de réalisation représenté. La sortie de la bascule D 36 est envoyée sur une bascule D37 qui donne en sortie la valeur du bruit mesuré. D'autre part, les bascules 34 et 37 ainsi que le compteur 35 sont remis à zéro par l'envoi d'une impulsion sur les entrées CL à la fin de chaque période de traitement, à savoir à la fin de chaque image.

Si la valeur de seuil est égale à un entier qui est une puissance de 2, dans ce cas la division et la moyenne peuvent être obtenues simplement en supprimant les bits les moins significatifs du résultat accumulé.

## Revendications

1. Procédé d'ajustement du coefficient de réduction de bruit K dans une image vidéo active, caractérisé par les étapes suivantes :
- pendant une période de traitement donné, on réalise en parallèle la détection de mouvement et la mesure de bruit, la mesure du bruit étant obtenue pour chaque pixel d'une image vidéo considéré comme stationnaire par un détecteur de mouvement traitant des images successives, en calculant la différence f_{d} entre le signal vidéo non traité, correspondant à ce pixel et le signal vidéo traité avec un coefficient de réduction de bruit K correspondant au pixel de même position spatiale dans une image précédente ;
- en calculant le carré de la valeur absolue de la différence de manière à obtenir une valeur |f_{d}| ;
- en additionnant la valeur |f_{d}| aux autres valeurs |f_{d}| déjà obtenues pour les pixels déterminés comme stationnaires de manière à former une valeur somme Σ|f_{d}| ;
- et en recommençant les opérations ci-dessus jusqu'à ce que le nombre de pixels traités soit égal à une valeur de seuil donnée N₀ ou jusqu'à la fin de la période de traitement, puis
- à la fin des opérations ci-dessus lorsque le nombre de pixels traités est égal à la valeur de seuil, on utilise la valeur Σ|f_{d}| pour déterminer la valeur d'un point de référence correspondant au mouvement en fonction du bruit, cette valeur donnant en fonction d'une courbe de transfert définissant le coefficient de réduction de bruit en fonction des valeurs en sortie du détecteur de mouvement, une nouvelle valeur (Kmin) pour le coefficient de réduction de bruit K, sinon on garde l'ancienne valeur du coefficient de réduction de bruit.

2. Procédé selon la revendication 1, caractérisé en ce que l'on modifie la dernière étape de telle sorte que :
- à la fin de la période de traitement, on utilise la valeur somme Σ|f_{d}| pour déterminer un point de référence donnant avec ladite courbe de transfert un nouveau coefficient de réduction de bruit K, on compare la nouvelle valeur du coefficient de réduction de bruit à la valeur courante de ce coefficient, si cette valeur est supérieure, on compare la nombre de pixels traités à la première valeur de seuil N₀, si il est supérieur ou égal, on utilise la nouvelle valeur du coefficient de réduction de bruit, sinon on garde l'ancienne valeur, si la valeur est inférieure, on compare le nombre de pixels traités à la deuxième valeur de seuil N₁, si il est supérieur ou égal, on utilise la nouvelle valeur du coefficient de réduction de bruit, sinon on garde l'ancienne valeur.

3. Procédé selon l'une quelconque des revendications 1 et 2, caractérisé en ce que le point de référence donnant un nouveau coefficient de réduction du bruit est déterminé en prenant la racine carré de la valeur Σ|f_{d}|.

4. Procédé selon l'une quelconque des revendications 1 et 2, caractérisé en ce que le point de référence donnant un nouveau coefficient de réduction du bruit est déterminé en prenant la valeur moyenne de la valeur Σ|f_{d}| /N₀, N₀ étant la valeur de seuil.

5. Procédé selon l'une quelconque des revendications 1 à 4, caractérisé en ce que la valeur de seuil est une puissance entière de deux (2^{N}).

6. Procédé selon l'une quelconque des revendications 1 à 5, caractérisé en ce que la période de traitement correspond à au moins une image vidéo.

## Patentansprüche

1. Verfahren zur Einstellung des Rauschreduktionskoeffizienten K in einem aktiven Videobild, gekennzeichnet durch folgende Schritte:
- während einer gegebenen Verarbeitungsperiode werden parallel zueinander die Bewegungserkennung und die Rauschmessung ausgeführt, wobei die Rauschmessung für jedes Pixel eines von einem die aufeinanderfolgenden Bilder bearbeitenden Bewegungsdetektor als stationär erachteten Videobildes erhalten wird, indem die Differenz f_{d} zwischen dem nichtbearbeiteten Videosignal entsprechend diesem Pixel und dem bearbeiteten Videosignal mit einem Rauschreduktionskoeffizienten K entsprechend dem Pixel an derselben räumlichen Stelle in einem vorangegangenen Bild berechnet wird;
- Berechnen des Quadrats des absoluten Wertes der Differenz, um einen Wert |f_{d}| zu erhalten;
- Addieren des Wertes |f_{d}| zu den anderen Werten |f_{d}|, die schon für die als stationär bestimmten Pixel erhalten worden sind, um einen Summenwert Σ|f_{d}| zu bilden;
- und Wiederholen der obigen Operationen, bis die Anzahl von bearbeiteten Pixeln einem gegebenen Schwellwert N₀ gleich ist oder bis zum Ende der Bearbeitungsperiode, und
- am Ende der obigen Operationen, wenn die Anzahl von bearbeiteten Pixeln dem Schwellwert gleich ist, Benutzen des Wertes Σ|f_{d}| zum Bestimmen des Wertes eines Bezugspunktes entsprechend einer Bewegung in Abhängigkeit vom Rauschen, wobei dieser Wert als Funktion einer den Rauschreduktionskoeffizienten definierenden Übertragungskurve als Funktion der Werte am Ausgang des Bewegungsdetektors einen neuen Wert (Kₘᵢₙ) für den Rauschreduktionskoeffizienten K gibt, und sonst der alte Wert des Rauschreduktionskoeffizienten beibehalten wird.

2. Verfahren nach Anspruch 1, dadurch gekennzeichnet, daß der letzte Schritt folgendermaßen abgeändert ist:
- am Ende der Verarbeitungsperiode wird der Summenwert Σ|f_{d}| zur Bestimmung eines Bezugspunktes benutzt, der mit der besagten Übertragungskurve einen neuen Rauschreduktionskoeffizienten K gibt, der neue Wert des Rauschreduktionskoeffizienten mit dem aktuellen Wert dieses Koeffizienten verglichen; wenn dieser Wert höher ist, wird die verarbeitete Pixelzahl mit dem ersten Schwellwert N₀ verglichen, wenn er höher oder gleich ist, wird der neue Wert des Rauschreduktionskoeffizienten benutzt, und wenn nicht, wird der alte Wert behalten, wenn der Wert niedriger ist, wird die verarbeitete Pixelzahl mit dem zweiten Schwellwert N₁ verglichen, wenn er höher oder gleich ist, wird der neue Wert des Rauschreduktionskoeffizienten benutzt, und wenn nicht, wird der alte Wert behalten.

3. Verfahren nach einem der Ansprüche 1 und 2, dadurch gekennzeichnet, daß der einen neuen Rauschreduktionskoeffizienten gebende Bezugspunkt durch Ziehen der Quadratwurzel des Wertes Σ|f_{d}| bestimmt wird.

4. Verfahren nach einem der Ansprüche 1 und 2, dadurch gekennzeichnet, daß der einen neuen Rauschreduktionskoeffizienten gebende Bezugspunkt durch Berechnen des Mittelwertes des Wertes Σ|f_{d}|/N₀ bestimmt wird, wobei N₀ der Schwellwert ist.

5. Verfahren nach einem der Ansprüche 1 bis 4, dadurch gekennzeichnet, daß der Schwellwert eine ganzzahlige Zweierpotenz (2^{N}) ist.

6. Verfahren nach einem der Ansprüche 1 bis 5, dadurch gekennzeichnet, daß die Verarbeitungsperiode mindestens einem Videobild entspricht.

## Claims

1. Method of adjusting the noise-reduction coefficient K in an active video image, characterised by the following steps:
- during a given processing period, the movement detection and the noise measurement are carried out in parallel, the measurement of the noise being obtained for each pixel of a video image considered to be stationary by a movement detector processing successive images, by calculating the difference f_{d} between the unprocessed video signal corresponding to this pixel, and the video signal processed with a noise-reduction coefficient K corresponding to the pixel at the same spatial position in a preceding image;
- by calculating the square of the absolute value of the difference so as to obtain a value |f_{d}|;
- by adding the value |f_{d}| to the other values |f_{d}| already obtained for the pixels defined as stationary, so as to form a sum value Σ|f_{d}|;
- and by recommencing the above operations until the number of pixels processed is equal to a given threshold value Nₒ, or until the end of the processing period, then
- at the end of the above operations, when the number of pixels processed is equal to the threshold value, the value Σ|f_{d}| is used to determine the value of a reference point corresponding to the movement as a function of the noise, this value giving as a function of a transfer curve defining the noise-reduction coefficient as a function of the values at the output of the movement detector, a new value (Kₘᵢₙ) for the noise- reduction coefficient K, otherwise the former value of the noise reduction coefficient is kept.

2. Method according to Claim 1, characterised in that the last step is modified so that:
- at the end of the processing period, the sum value Σ|f_{d}| is used to determine a reference point giving, with the said transfer curve, a new noise-reduction coefficient K, the new value of the noise-reduction coefficient is compared to the current value of this coefficient, if this value is greater, the number of pixels processed is compared to the first threshold value Nₒ, if it is greater or equal, the new value of the noise-reduction coefficient is used, otherwise the former value is kept, if the value is lower, the number of pixels processed is compared to the first threshold value N₁, if it is greater or equal, the new value of the noise-reduction coefficient is used, otherwise the former value is kept.

3. Method according to either of Claims 1 or 2, characterised in that the reference point giving a new reduction coefficient of the noise is determined by taking the square root of the value Σ|f_{d}|.

4. Method according to either of Claims 1 or 2, characterised in that the reference point giving a new reduction coefficient of the noise is determined by taking the mean value of the value Σ|f_{d}|/Nₒ, Nₒ being the threshold value.

5. Method according to any one of Claims 1 to 4, characterised in that the threshold value is an integer power of two (2^{N}).

6. Method according to any one of Claims 1 to 5, characterised in that the processing period corresponds to at least one video image.
